(19) Europäisches Patentamt
European Patent Office
Office européen des brevets

(11) **EP 3 979 717 A1**

(12) **DEMANDE DE BREVET EUROPEEN**

(43) Date de publication:
**06.04.2022 Bulletin 2022/14**

(21) Numéro de dépôt: **21200011.1**

(22) Date de dépôt: **29.09.2021**

(51) Classification Internationale des Brevets (IPC):
**H04W 48/20** (2009.01)       **G06N 3/00** (2006.01)
**G06N 7/00** (2006.01)       **G06N 20/00** (2019.01)

(52) Classification Coopérative des Brevets (CPC):
**H04W 48/20; G06N 3/00; G06N 7/00; G06N 20/00;
H04L 41/046; H04L 41/0806; H04L 41/16;**
H04W 24/00

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**KH MA MD TN**

(30) Priorité: **30.09.2020 FR 2009989**

(71) Demandeur: **Commissariat à l'énergie atomique
et aux énergies alternatives
75015 Paris (FR)**

(72) Inventeurs:
• **SANA, Mohamed**
  **38054 GRENOBLE CEDEX 09 (FR)**
• **DI PIETRO, Nicola**
  **38054 GRENOBLE CEDEX 09 (FR)**
• **CALVANESE STRINATI, Emilio**
  **38054 GRENOBLE CEDEX 09 (FR)**
• **MISCOPEIN, Benoît**
  **380504 GRENOBLE CEDEX 09 (FR)**

(74) Mandataire: **Brevalex
56, Boulevard de l'Embouchure
B.P. 27519
31075 Toulouse Cedex 2 (FR)**

(54) **MÉTHODE D'ASSOCIATION D'ÉQUIPEMENTS D'UTILISATEURS DANS UN RÉSEAU CELLULAIRE SELON UNE POLITIQUE D'ASSOCIATION TRANSFÉRABLE**

(57)    La présente invention concerne une méthode d'association d'équipements d'utilisateurs à des stations de base d'un réseau cellulaire, en particulier d'un réseau hétérogène tel qu'un réseau 5G, ladite méthode utilisant un algorithme d'apprentissage par renforcement multi-agent (MARL). Lorsqu'un équipement d'utilisateur entre dans le réseau, l'agent associé à cet équipement télécharge l'instance d'un méta-modèle d'association auprès d'une unité coordinatrice, préalablement entrainé au moyen d'un apprentissage par renforcement. L'agent construit ensuite un vecteur d'observation locale, comportant des observables relatifs à l'équipement d'utilisateur, et un vecteur d'observation globale, comportant des observables relatifs à l'environnement de cet équipement. Les vecteurs d'observation locale et globale sont projetés dans un même espace de référence, la concaténation des vecteurs ainsi projetés encodant l'état de l'agent. Il déduit du modèle et de cet état, une décision d'association. Le modèle est mis à jour selon une méthode de gradient de stratégie pour tenir compte de l'évolution de l'environnement de l'utilisateur.

FIG.2

EP 3 979 717 A1

**Description**

**DOMAINE TECHNIQUE**

La présente invention concerne le domaine des réseaux cellulaires et plus particulièrement l'association d'équipements d'utilisateurs (UEs) à des stations de base dans un réseau hétérogène tel que ceux de la cinquième génération (5G). Elle concerne également le domaine de l'intelligence artificielle et plus particulièrement celui de l'apprentissage par renforcement multi-agent ou MARL (*Multi-Agent Reinforcement Learning*).

**ÉTAT DE LA TECHNIQUE ANTÉRIEURE**

Les méthodes d'association de terminaux mobiles ou UEs (*User Equipments*) aux stations de base d'un réseau cellulaire ont fait l'objet de très nombreuses recherches ces vingt dernières années. De manière générale, une méthode d'association vise à déterminer, pour chaque terminal mobile, la station de base (autrement dit la cellule) qui devra le servir, compte tenu des besoins de l'ensemble des utilisateurs (débit, rapport signal sur bruit, latence, etc.) et des contraintes relatives aux stations de base (puissance maximale d'émission, niveau d'interférence, bande passante disponible, etc.). Une grande diversité de méthodes d'association a été proposée dans l'état de la technique, selon la fonction-objectif à atteindre et les contraintes à respecter.

Avec le déploiement de réseaux cellulaires de 5ème génération, les techniques d'association doivent évoluer pour faire face à de nouveaux défis. En effet, parmi les réseaux 5G, beaucoup sont hétérogènes par nature. Un exemple de réseau hétérogène, envisagé dans le cadre de la 5G, implique la superposition d'une couche dense de petites cellules ou SBS (*Small cell Base Stations*) opérant notamment dans la bande millimétrique, destinées à assurer une couverture à faible distance et débit élevé, et d'une couche peu dense de macrocellules ou MBS (*Macro cell Base Stations*), opérant dans la bande sub-6 GHz, destinée à assurer une couverture continue. Les petites cellules disposent d'un grand nombre de ressources de transmission que ce soit en termes de ressources spectrales ou en ressources spatiales (formation de faisceaux directifs). En outre, l'association d'un terminal mobile avec une station de base (SBS ou MBS) nécessite de prendre en compte la charge des différentes stations de base, les niveaux d'interférence, les débits des différents utilisateurs, les configurations possibles de faisceaux etc. Il en résulte que l'optimisation de la performance globale du réseau devient particulièrement complexe. On peut montrer que la recherche de l'association optimale est en fait un problème combinatoire dont la complexité est de classe NP, autrement dit de complexité évoluant de manière exponentielle avec le nombre d'entités (utilisateurs, stations de base) dans le réseau.

Une méthode d'association de terminaux mobiles à des stations de base d'un réseau hétérogène a été décrite dans l'article de N. Zhao et al. intitulé « Deep reinforcement learning for user association and resource allocation in heterogeneous networks » publié dans Proc. of IEEE Global Communications Conference (GLOBECOM), pp. 1-6, 2018. Cette méthode d'association fait appel à une méthode d'apprentissage par renforcement connue sous le nom de Q-learning. On pourra trouver une description de cette méthode dans l'article de C. Watkins et al. intitulé « Q-learning » publié dans la revue Machine Learning, vol. 8, No. 3-4, pp. 279-292, 1992. On rappelle qu'une méthode d'apprentissage par renforcement est une méthode d'apprentissage automatique dans laquelle un agent autonome, plongé dans un environnement, apprend des actions à effectuer à partir d'expériences, de manière à optimiser une récompense cumulée au cours du temps. L'agent prend des décisions en fonction de l'état de l'environnement et ce dernier lui procure des récompenses en fonction des actions qu'il effectue. Dans l'article précité, la méthode d'association est du type multi-agent, chaque équipement d'utilisateur jouant le rôle d'un agent et apprenant à partir de son environnement, les différents agents opérant de manière coopérative. Toutefois, cette méthode d'association utilise un espace d'états représentant la satisfaction (ou l'absence de satisfaction) d'une qualité de service (QoS) minimale ($\Omega_i$) pour chacun des utilisateurs du réseau, chaque utilisateur étant par ailleurs informé de la satisfaction ou non des qualités de service requises par les autres utilisateurs. Ce type de coopération suppose l'échange d'un nombre important de messages *(message passing)* entre les terminaux mobiles via des canaux de contrôle et donc la mobilisation de ressources de transmission à cet effet. En outre, la détermination de la politique d'association suppose l'utilisation d'un réseau de neurones DDQN (*Double Deep Q-network*) dont la taille des variables d'entrée croît avec le nombre d'utilisateurs. Il en résulte que la méthode d'association proposée n'est pas adaptée au changement évolutif du (« scalable » avec le) nombre d'utilisateurs dans le réseau.

En outre, le changement de position, le départ ou l'arrivée d'un utilisateur dans une cellule est susceptible de modifier l'association optimale du réseau. Dans la méthode proposée par de N. Zhao *et al.,* à chaque fois qu'un utilisateur rejoint ou quitte une cellule, une modification de l'architecture du réseau de neurones de chacun des utilisateurs et une nouvelle phase d'apprentissage sont nécessaires et ce, pour chacun d'entre eux. En effet, chaque utilisateur doit réapprendre sa propre politique d'association. En particulier, la politique d'association élaborée lors d'une précédente phase d'apprentissage par renforcement n'est pas transférable à un nouveau scenario du réseau (par exemple, arrivée ou départ d'un utilisateur d'une cellule, changement des ressources disponibles par station).

Un objet de la présente invention est par conséquent de proposer une méthode d'association d'équipements d'utilisateurs à des stations de base d'un réseau cellulaire, en particulier d'un réseau hétérogène tel qu'un réseau 5G, mettant en œuvre un algorithme d'apprentissage par renforcement multi-agent permettant de construire une politique d'association qui soit à la fois adaptative et transférable à un nouveau scenario du réseau, notamment lorsqu'un nouvel utilisateur arrive ou part d'une cellule.

**EXPOSÉ DE L'INVENTION**

La présente invention est définie par une méthode d'association d'équipements d'utilisateurs à des stations de base d'un réseau, ladite méthode d'association mettant en œuvre une méthode d'apprentissage par renforcement multi-agent, chaque équipement d'utilisateur étant représenté par un agent, dans laquelle :

- lorsqu'un équipement d'utilisateur $\mu_j$ entre dans le réseau, l'agent représentant cet équipement d'utilisateur télécharge une instance d'un méta-modèle ($\pi_{w0}$) pour initialiser un modèle de stratégie d'association ($\pi_{w,j}$), ledit méta-modèle présentant une architecture indépendante de l'utilisateur ;

- l'agent représentant l'équipement d'utilisateur $\mu_j$ construit un vecteur d'observation locale ( $\mathbf{o}_j^{\ell}(t)$ ) comprenant des observables relatifs à cet équipement et un vecteur d'observation globale ( $\mathbf{o}_j^{g}(t)$ ) comprenant des observables relatifs à un environnement de cet équipement ;

- l'agent associé à l'équipement d'utilisateur $u_j$ projette le vecteur d'observation locale et le vecteur d'observation globale dans un même espace de référence et combine les deux vecteurs ainsi projetés pour fournir un code ($\mathbf{c}_j(t)$) de l'état ($\mathbf{s}_j(t)$) de l'agent ;

- l'agent associé à l'équipement d'utilisateur $u_j$ met à jour le modèle de stratégie d'association au moyen d'une méthode de gradient de stratégie ;

- l'agent associé à l'équipement d'utilisateur $\mu_j$ décide de la station de base avec laquelle s'associer et reçoit en retour une récompense commune calculée à partir d'une fonction d'utilité du réseau.

Typiquement, la stratégie d'association $\pi_{w,j}(a|\mathbf{s})$ donne la probabilité de prendre l'action $a$ lorsque l'agent est dans l'état s, l'action $a$ correspondant à une association avec une station de base du réseau.

Le vecteur d'observation locale, $\mathbf{o}_j^{\ell}(t)$, de l'utilisateur $u_j$, à l'instant $t$ peut comprendre la décision d'association de l'agent à l'instant précédent, $a_j(t\text{-}1)$, pour requérir l'association de l'équipement d'utilisateur à une station de base, la réponse de la station de base à cette requête, $ACK_j(t\text{-}1)$, le débit requis par le terminal mobile à l'instant $t$, $D_j(t)$, ainsi qu'une estimation de la capacité de la liaison descendante de cette station de base avec $\mu_j$ à l'instant précédent $t\text{-}1$, $R_j(t\text{-}1)$.

Le vecteur d'observation globale, $\mathbf{o}_j^{g}(t)$, peut comprendre, quant à lui, les coordonnées des équipements d'utilisateurs situés dans le voisinage $V_j$ de $u_j$, ainsi que les capacités respectives des liaisons descendantes entre ces équipements d'utilisateurs et les stations de base avec lesquelles ils sont associés.

Avantageusement, le vecteur d'observation globale est projeté dans un espace de référence au moyen d'un mécanisme d'attention calculant pour chaque contribution d'un utilisateur $u_i \in V_j$ au vecteur d'observation globale, un vecteur de clé, $\mathbf{k}_i$ un vecteur de requête, $\mathbf{q}_i$, et un vecteur de valeur, $\upsilon_i$, et que l'on calcule pour chaque utilisateur $u_i \in V_j$, un score d'attention $\alpha_{i,j}$ entre cet utilisateur et l'utilisateur $u_j$, à partir du produit scalaire du vecteur de requête de $u_i$ et du vecteur de clé de $u_j$, le vecteur d'observation globale projeté étant obtenu comme combinaison linéaire des vecteurs de valeur, $\upsilon_i$, respectifs des équipements d'utilisateurs $u_i \in V_j$ pondérés avec leurs scores d'attention correspondants, $\alpha_{i,j}$, la projection des vecteurs d'observation locale et globale, leur combinaison ainsi que l'obtention des probabilités d'association $\pi_{w,j}(a|\mathbf{s})$ avec les différentes stations de base du réseau étant réalisée au moyen d'un réseau de neurones artificiels initialement paramétré à partir de ladite instance du méta-modèle.

Le vecteur d'observation locale peut ensuite être projeté dans le même espace de référence et les vecteurs d'observation locale et globale sont combinés par un mécanisme d'auto-attention pour fournir le code ($\mathbf{c}_j(t)$) de l'état ($\mathbf{s}_j(t)$) de l'agent.

Avantageusement, la stratégie d'association, $\pi_{w,j}(a|\mathbf{s})$ est paramétrée par un ensemble de paramètres représenté par un vecteur w, le dit vecteur étant mis à jour itérativement par $\mathbf{w}_{t+1} = \mathbf{w}_t + \mu\hat{\rho}_t$ avec où $\mu$ est le taux d'apprentissage,

$$\zeta(t) = \frac{\pi_{w_t}\left(a_j \big| \mathbf{s}_j\right)}{\pi_{w_{t-1}}\left(a_j \big| \mathbf{s}_j\right)}$$

et $\hat{\rho}_t = E(\nabla\zeta(\mathbf{w}_t)\hat{A}_t(a_j|\mathbf{s}_j))$ où est le rapport entre la distribution de probabilité de prendre l'action $a_j$ dans l'état $\mathbf{s}_j$ à l'instant $t$ et la distribution de cette même probabilité à l'instant précédent $t$-1, $\hat{A}_t(a_j|\mathbf{s}_j)$ étant la fonction d'avantage de l'action $a_j$ dans l'état $\mathbf{s}_j$ à l'instant $t$.

Alternativement, la stratégie d'association, $\pi_{w,j}(a|\mathbf{s})$ est paramétrée par un ensemble de paramètres représenté par un vecteur w, le dit vecteur étant mis à jour itérativement par $\mathbf{w}_{t+1} = \mathbf{w}_t + \mu\hat{\rho}_t$ où $\mu$ est le taux d'apprentissage, et

$$\hat{\rho}_t = E\left(\nabla\left(\min\left(\zeta\left(\mathbf{w}_t\right)\hat{A}_t\left(a_j\big|\mathbf{s}_j\right), clip\left(\zeta\left(\mathbf{w}_t\right), 1-\varepsilon_1, 1-\varepsilon_2\right).\hat{A}_t\left(a_j\big|\mathbf{s}_j\right)\right)\right)\right)$$

$$\zeta(t) = \frac{\pi_{w_t}\left(a_j\big|\mathbf{s}_j\right)}{\pi_{w_{t-1}}\left(a_j\big|\mathbf{s}_j\right)}$$

avec $clip(x,a,b) = \min(\max(x, a), b)$ et $0<\varepsilon_1<\varepsilon_2<1$, et où est le rapport entre la distribution de probabilité de prendre l'action $a_j$ dans l'état $\mathbf{s}_j$ à l'instant $t$ et la distribution de cette même probabilité à l'instant précédent $t$-1, $\hat{A}_t(a_j|\mathbf{s}_j)$ étant la fonction d'avantage de l'action $a_j$ dans l'état $\mathbf{s}_j$ à l'instant $t$.

Avantageusement, une métrique de divergence de Kullback-Leibler, $D_{KL}(\pi_w\|\pi_{w0})$, peut être calculée entre la distribution de probabilité, $\pi_{w0}$, relative à la stratégie d'association du méta-modèle et celle, $\pi_w$, relative à la stratégie résultant du modèle mis à jour, l'agent représentant l'équipement d'utilisateur transmettant à l'unité coordinatrice les paramètres du modèle mis à jour si cette métrique est supérieure en valeur absolue à un seuil prédéterminé.

Selon une première variante, les agents représentant les équipements d'utilisateurs résident dans l'unité coordinatrice, les équipements transmettant à l'unité coordinatrice leurs vecteurs d'observation locale, $\mathbf{o}_j^{\ell}(t)$ , et d'observation globale, $\mathbf{o}_j^{g}(t)$ , et les décisions d'association des différents agents étant transmises par l'unité coordinatrice à ces derniers.

Selon une seconde variante, les agents représentant les équipements d'utilisateurs résident dans l'unité coordinatrice, les équipements transmettant à l'unité coordinatrice leurs vecteurs d'observation locale, $\mathbf{o}_j^{\ell}(t)$ , accompagnés de leurs vecteurs de poids de clé, de requête et de valeur $\mathbf{k}_j$, $\mathbf{q}_j$, $\upsilon_j$ , les décisions d'association des différents agents étant transmises par l'unité coordinatrice à ces derniers.

Selon une troisième variante, les équipements d'utilisateurs échangent entre voisins leurs vecteurs de poids de clé, de requête et de valeur $\mathbf{k}_j$ , $\mathbf{q}_j$, $\upsilon_j$, les agents représentant les différents équipements d'utilisateurs résidant dans ces équipements et prenant les décisions d'association.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1 représente de manière schématique une situation d'association d'équipements d'utilisateurs à des stations de base dans un réseau hétérogène ;
La Fig. 2 illustre de manière schématique le principe de fonctionnement de la méthode d'association selon la présente invention ;
La Fig. 3 représente de manière schématique la manière dont est décidée l'association d'un équipement d'utilisateur avec une station de base, selon un mode de réalisation de l'invention ;
La Fig. 4 représente sous forme d'ordinogramme un exemple de mise en œuvre de la méthode d'association dans un réseau cellulaire.

## EXPOSÉ DÉTAILLÉ DE MODES DE RÉALISATION PARTICULIERS

On considérera dans la suite un réseau cellulaire composé d'une pluralité de stations de base. Sans perte de généralité et à titre d'illustration seulement, nous supposerons que ce réseau cellulaire est hétérogène. Par réseau cellulaire hétérogène nous entendons un réseau résultant de la superposition d'une couche de petites cellules (SBS) de faible couverture, mais potentiellement capable d'offrir à chaque UE un débit élevé, et d'une couche de macro-cellules (MBS), garantissant la continuité de la couverture du réseau en offrant une plus grande portée. Un exemple typique d'application est celui d'un réseau 5G dans lequel les cellules SBS opèrent dans la bande millimétrique et les cellules MBS opèrent dans la bande sub-6 GHz. L'homme du métier comprendra toutefois que la méthode d'association selon la présente invention s'applique à un réseau cellulaire quelconque, qu'il soit homogène ou hétérogène.

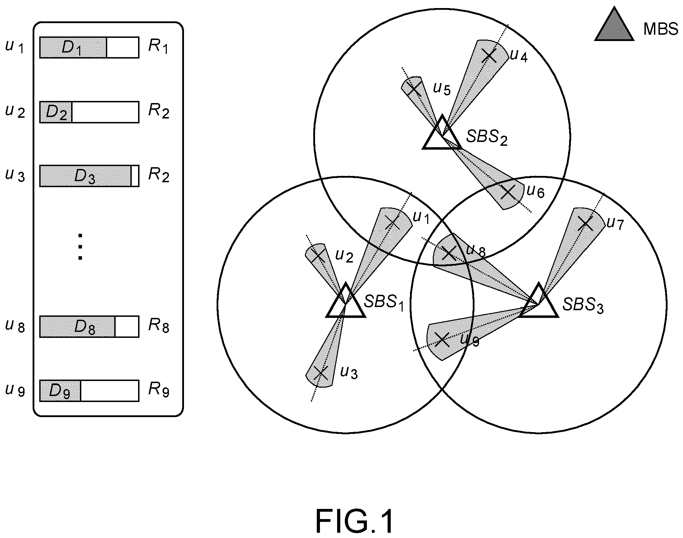

La Fig. 1 représente un exemple d'association d'équipements d'utilisateur (UEs) avec des stations de base dans un tel réseau hétérogène.

On a noté $u_1,...,u_8$ les équipements d'utilisateurs (par exemples des terminaux mobiles), $SBS_1,SBS_2,SBS_3$ les stations de base de trois petites cellules et $MBS$ la station de base d'une macro-cellule.

A un instant $t$ donné, chaque équipement d'utilisateur $u_j$ requiert un certain débit $D_j(t)$ pour satisfaire à une contrainte de qualité de service (QoS). L'association de ce terminal à une station de base $BS_i$ (on notera convention-nellement $BS_0$ la station MBS et $BS_i$, $i = 1,..,N_s$ les $N_s$ stations de base SBS) est considérée satisfaisante si la capacité $R_{ij}$ du canal, donnée par la formule de Shannon $R_{ij} = B_{ij} \log(1+SINR_{ij})$ est telle que $R_{ij} \geq D_j$ où $B_{ij}$ et $SINR_{ij}$ sont respec-tivement la bande passante et le rapport signal à bruit plus interférence relatifs au canal. L'interférence à prendre en compte est ici l'interférence due aux autres communications au sein de la même cellule (interférence intracellulaire) ainsi que celle due aux communications des autres cellules (interférence intercellulaire).

Pour chaque station de base $BS_i$, on note $U_i$ l'ensemble des équipements d'utilisateurs qui sont situés dans la couverture de $BS_i$. Ainsi dans l'exemple illustré, $U_0=\{u_1,..,u_9\}$, $U_1=\{u_1,u_2,u_3,u_8,u_9\}$, $U_2=\{u_1,u_4,u_5,u_6,u_8\}$ et $U_3=\{u_6,u_7,u_8,u_9\}$. De manière réciproque, pour un équipement d'utilisateur $u_j$ donné, on note $S_j$ l'ensemble des stations de base susceptibles de le servir. Ainsi, dans l'exemple illustré $S_1 = \{BS_0,BS_1,BS_2\}$, $S_5 = \{BS_0,BS_2\}$, et $S_8 = \{BS_0,BS_1,BS_2,BS_3\}$.

On recherche à associer les équipements d'utilisateurs aux stations de base de manière à maximiser une fonction d'utilité, $U(t)$, sur l'ensemble du réseau tout en respectant un certain nombre de contraintes portant sur les ressources de transmission à la disposition des stations de base. Si l'on indique par $x_{ij} =1$ l'association de l'équipement d'utilisateur $u_j$ avec la station de base $BS_i$ et, $x_{ij} =0$ l'absence d'association, et si l'on suppose qu'un équipement d'utilisateur ne peut s'associer qu'avec une seule station de base, l'association recherchée est obtenue en résolvant le problème d'optimisation :

$$\max_{x_{ij}} U(t) \tag{1-1}$$

en respectant les contraintes :

$$x_{ij} = \{0,1\} \tag{1-2}$$

$$\sum_{u_j \in U_i} x_{ij} \leq N_i \ , \ \forall BS_i \ , \ i = 0,..,N_s \tag{1-3}$$

$$\sum_{BS_i \in S_j} x_{ij} = 1, \quad \forall u_j \ , \ j = 1,..,N_u \tag{1-4}$$

où $N_i$ est le nombre maximal d'équipements d'utilisateurs que la station de base $BS_i$ peut supporter simultanément (cela peut notamment correspondre au nombre de ressources de transmission disponibles, par exemple le nombre de faisceaux de transmissions distincts dont dispose la station), $N_s$ est le nombre de SBS et $N_u$ est le nombre d'équipements d'utilisateurs. La contrainte (1-3) traduit simplement le fait que les équipements d'utilisateurs ne peuvent être servis par une station de base qu'à concurrence du nombre maximal d'équipements utilisateurs admissibles, la contrainte (1-4) que chaque équipement d'utilisateur doit être servi par une station de base. En pratique, la quantité de ressources de la station de base MBS ($BS_0$) étant sensiblement plus élevée que celles des stations de base BS ($BS_i$ , $i = 1,..., Ns$), la contrainte sera quasiment toujours satisfaite pour $i = 0$. Idéalement, les requêtes de débit des différents utilisateurs doivent être respectées et dans ce cas :

$$D_j \leq \sum_{BS_i \in S_j} x_{ij} R_{ij} \qquad (1\text{-}5)$$

La fonction d'utilité du réseau pourra être choisie comme la capacité totale pouvant être offerte aux différents utilisateurs, soit :

$$U(t) = \sum_{i,j} x_{ij} R_{ij} \qquad (2\text{-}1)$$

le cas échéant, en tenant compte des requêtes de débit des utilisateurs :

$$U(t) = \sum_{i,j} x_{ij} \min\left(D_j, R_{ij}\right) \qquad (2\text{-}2)$$

voire encore en faisant intervenir des fonctions non-linéaires, par exemple logarithmiques, des débits pour garantir une certaine équité entre les différents utilisateurs (pour réduire l'écart disproportionné qu'il peut y avoir entre eux sur la base de leurs débits perçus) :

$$U(t) = \sum_{i,j} x_{ij} \log_2\left(R_{ij}\right) \qquad (2\text{-}3)$$

D'autres fonctions d'utilité du réseau pourront être envisagées par l'homme du métier (par exemple en tenant compte des types de service xMBB, uMTC et mMTC requis par les différents utilisateurs). De manière générale, la fonction d'utilité du réseau est représentative d'une qualité de service offert aux utilisateurs du réseau, notamment en termes de capacité et/ou de latence.

L'idée à la base de l'invention est d'élaborer une politique d'association commune à l'ensemble des utilisateurs au moyen d'une méthode d'apprentissage par renforcement, chaque utilisateur entrant dans le réseau utilisant cette politique commune pour transmettre ses requêtes d'association, puis adaptant sa politique d'association au cours du temps en fonction de l'évolution de son environnement.

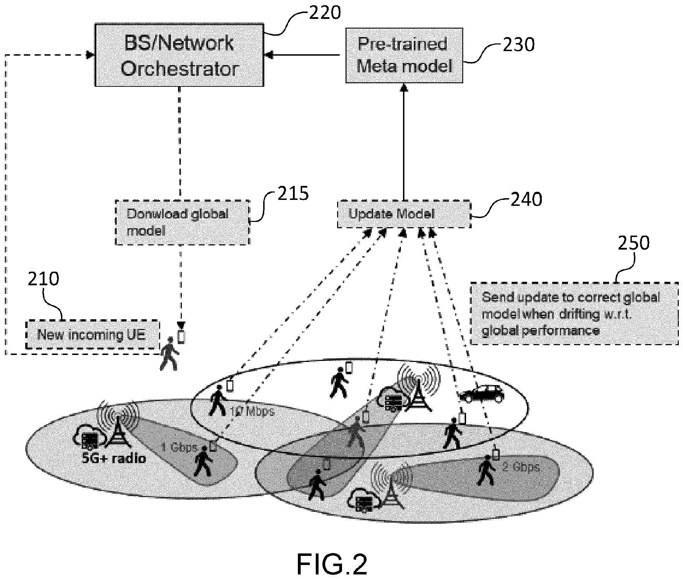

Le principe de fonctionnement de la méthode d'association selon la présente invention est illustré en Fig. 2.

Lorsqu'un nouvel utilisateur, 210, entre dans le réseau, il télécharge en 215 auprès d'une unité coordinatrice, 220, un modèle commun (ou global) donnant la politique d'association commune, ce modèle commun étant obtenu comme instance d'un méta-modèle, 230, préalablement entraîné lors d'une phase d'apprentissage par renforcement.

Alternativement, le méta-modèle peut être téléchargée à partir d'une mémoire cache d'une station de base qui l'aura elle-même préalablement téléchargé.

Ce modèle global défini par son jeu de paramètres, noté synthétiquement, w , permet au nouvel utilisateur de décider, à partir d'un vecteur d'observation locale et d'un vecteur d'observation globale, avec quelle station de base il va s'associer. L'architecture du méta-modèle et le jeu de paramètres sont par définition indépendants de l'utilisateur.

Chaque utilisateur du réseau peut ensuite faire évoluer en 240 son modèle de manière indépendante en fonction des variations de son environnement. Les utilisateurs peuvent ensuite faire remonter, en 250, les paramètres de leurs modèles respectifs à l'unité coordinatrice afin de mettre à jour le méta-modèle de manière fédérative.

Plus précisément, on définit pour chaque équipement d'utilisateur $u_j$, un vecteur d'observation locale, $\mathbf{o}_j^{\ell}(t)$, représentant une connaissance de son environnement local à l'instant $t$. Par observation locale, on entend un ensemble d'observables propres à cet utilisateur.

On pourra ainsi choisir comme vecteur d'observation locale :

$$\mathbf{o}_j^{\ell}(t) = \left(a_j(t-1), ACK_j(t-1), RSSI_j(t), D_j(t), R_j(t-1)\right) \qquad (3)$$

où $a_j(t\text{-}1)$ est l'action ayant été effectuée par l'utilisateur $\mu_j$ à l'instant précédent, c'est-à-dire la requête d'association émise, $ACK_j(t\text{-}1)$ est la réponse à cette requête d'association, renvoyée par la station de base à laquelle elle a été transmise (par exemple $ACK_j(t\text{-}1) = 1$ si l'association est acceptée $ACK_j(t\text{-}1) = 0$ si l'association est refusée), $RSSI_j(t)$ est la mesure à l'instant $t$ de la puissance reçue de la station de base à laquelle le terminal mobile (UE) est associé, $D_j(t)$ est le débit requis par le terminal mobile à l'instant $t$, $R_j(t\text{-}1)$ est une estimation de la capacité de canal de la liaison descendante à l'instant précédent $t\text{-}1$ (autrement dit, $Rj(t\text{-}1)=B_{ij}(t\text{-}1)\log_2(1+SINR_{ij}(t\text{-}1))$ où $B_{ij}(t\text{-}1)$ et $SINR_{ij}(t\text{-}1)$ sont respectivement la bande passante et le rapport signal sur bruit plus interférence à l'instant précédent, $t\text{-}1$.

Le cas échéant, le vecteur d'observation locale pourra également comprendre la valeur de la capacité totale du réseau $R(t\text{-}1)$ à l'instant précédent, $t\text{-}1$. Le vecteur d'observation ne perd cependant pas pour autant son caractère local dans la mesure où cette information est disponible localement à l'instant, $t$.

Il convient de noter que certaines composantes du vecteur d'observation locale $\mathbf{o}_j^{\ell}(t)$ sont optionnelles. Ainsi, par exemple, s'il n'est pas nécessaire de prendre en compte la demande courante de débit de l'utilisateur (service correspondant à une catégorie *Best Effort*), la composante $D_j(t)$ pourra être omise.

Inversement, on pourra faire figurer dans le vecteur d'observation locale, des composantes supplémentaires telles que, par exemple, une estimation des angles d'arrivée des faisceaux des différentes stations de base $BS_i \in S_j$.

L'action d'un équipement d'utilisateur à l'instant t est définie par la requête d'association de cet utilisateur, soit $a_j(t)=i$ où $ES_i \in S_j$. Cette action est décidée par l'utilisateur selon une stratégie $\pi_j$ qui sera explicitée plus loin.

A chaque utilisateur $u_j$, on associe également un vecteur d'observation globale, $\mathbf{o}_j^{g}(t)$, à l'instant $t$. Par observation globale, on entend un ensemble d'observables relatifs à des équipements d'utilisateurs situés dans le voisinage $V_j$ de l'utilisateur $u_j$. Le voisinage de l'utilisateur $\mu_j$ pourra être défini de manière géométrique (équipements d'utilisateurs appartenant à un disque de rayon prédéterminé autour de $u_j$) ou bien à partir d'un niveau de réception (niveau de signal reçu supérieur à un seuil prédéterminé).

Dans tous les cas, on pourra ainsi choisir comme vecteur d'observation globale :

$$\mathbf{o}_j^{g}(t) = \left( \left\{ \left( x_k, y_k; R_k(t) \right) \middle| u_k \in V_j \right\} \right) \qquad (4)$$

où $(x_k, y_k)$ sont les coordonnées de l'équipement $u_k$ situé dans le voisinage $V_j$ et $R_k(t)$ est la capacité de la liaison descendante entre la station de base $BS_{a(k)}$ associé à l'équipement $u_k$ et cet équipement.

On notera $\mathbf{o}_j(t) = \left( \mathbf{o}_j^{\ell}(t), \mathbf{o}_j^{g}(t) \right)$ le vecteur d'observation composite résultant de la concaténation du vecteur d'observation locale et du vecteur d'observation globale de l'utilisateur $u_j$. A chaque instant $t$, le vecteur $\mathbf{o}_j(t)$ représente une observation partielle de l'état, $s_j(t)$, de l'environnement de l'utilisateur $u_j$.

Après que l'agent associé à l'utilisateur $u_j$ a observé le vecteur $\mathbf{o}_j(t)$ et décidé d'une action $a_j(t)$ (c'est-à-dire a requis une association à une station de base), celui-ci reçoit une récompense qui n'est pas propre à l'équipement de l'utilisateur en question mais commune à l'ensemble des utilisateurs. Plus précisément, celle-ci est choisie égale à la fonction d'utilité définie plus haut $r_j(t)= r(t) = U(t)$.

L'expérience résultante de l'agent associé à l'utilisateur à l'instant $t$ est définie par le quadruplet :

$$e_j(t) = \left( \mathbf{o}_j(t), a_j(t), r(t), \mathbf{o}_j(t+1) \right) \qquad (5)$$

Les expériences successives sont stockées dans une mémoire, par exemple dans une mémoire locale de l'équipement de l'utilisateur pour permettre de stabiliser le processus d'apprentissage par rejeu (*replay memory*).

Chaque agent représentant (c'est-à-dire associé à) un utilisateur suit une stratégie ou politique (*policy*) visant à maximiser la somme de récompenses au cours du temps, chaque récompense étant affectée d'un facteur d'actualisation $\gamma$ déterminant le poids des récompenses futures dans le choix de l'action à l'instant $t$. Une politique est une fonction qui donne pour chaque état les probabilités de sélectionner les différentes actions possibles.

En pratique, pour une séquence (ou épisode) de durée finie $T$, chaque agent représentant un $u_j$ suit une stratégie $\pi_j$ pour maximiser en chaque instant $t$ la somme de récompenses actualisées :

$$G_j(t) = \sum_{\tau=1}^{T} \gamma^{\tau-1} r_j(t+\tau) \qquad (6)$$

où $r_j(t) = U(t)$ est dans le cas présent la récompense commune égale à la fonction d'utilité précitée.

Comme nous le verrons plus loin, la stratégie suivie par l'utilisateur est initialisée lorsque celui-ci entre dans le réseau par un politique $\pi_w$ définie par le méta-modèle stocké dans l'unité coordinatrice. Cette stratégie peut ensuite évoluer de manière indépendante en fonction de l'environnement de chaque utilisateur. Elle est alors notée $\pi_{w,j}$.

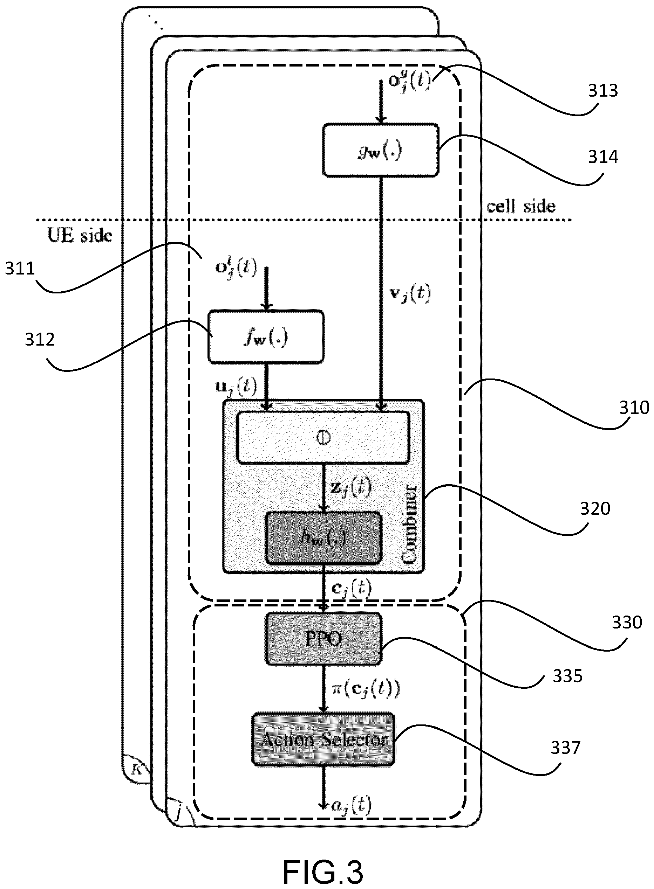

La Fig. 3 représente de manière schématique la manière dont un agent décide l'association d'un équipement d'utilisateur avec une station de base.

La méthode d'association comporte deux phases.

Dans une première phase, 310, on code l'état de l'environnement de l'utilisateur à partir de son vecteur d'observation locale et de son vecteur d'observation globale.

Dans une seconde phase, 330, l'agent choisit l'action $a_j(t)$ à effectuer, autrement dit la station de base à laquelle l'équipement doit s'associer, à partir de l'état interne précédemment encodé.

Dans la première phase, on forme en 311 un vecteur d'observation locale, $\mathbf{o}_j^\ell(t)$ , à partir d'observables propres à l'utilisateur, par exemple selon l'expression (3). De manière similaire, on forme en 313 un vecteur d'observation globale, $\mathbf{o}_j^g(t)$ , à partir d'observables relatifs à des équipements situés dans le voisinage $V_j$ de l'équipement de cet utilisateur, par exemple selon l'expression (4).

A la différence du vecteur d'observation locale, la taille du vecteur d'observation globale est variable. En effet, celle-ci varie avec le nombre d'équipements d'utilisateurs présents dans le voisinage, $N_j = card(V_j)$. En outre, pour des raisons de confidentialité, il peut être souhaitable qu'un équipement d'utilisateur n'accède pas aux informations de position de ses différents voisins.

Pour ces raisons, on calcule des vecteurs d'observation locale et d'observation globale projetés dans un même espace de référence.

Plus précisément, en 312 on applique une première fonction de projection $f_w : \mathbb{R}^\ell \to \mathbb{R}^n$ où $\ell$ est la dimension du vecteur d'observation locale et $n$ est la dimension de l'espace de référence de dimension fixe (notamment indépendante de l'utilisateur), pour obtenir un vecteur d'observation locale projeté $\mathbf{u}_j(t) = f_w\left(\mathbf{o}_j^\ell(t)\right)$ .

De manière similaire, en 314, on applique une seconde fonction de projection $g_w : \mathbb{R}^{m.N_j} \to \mathbb{R}^n$ où $m.N_j$ est la dimension du vecteur d'observation globale (on notera que $m = 3$ dans le cas de l'expression (4)), pour obtenir un vecteur d'observation globale projeté, $\mathbf{v}_j(t) = g_w\left(\mathbf{o}_j^g(t)\right)$ .

Avantageusement, pour avoir une architecture de réseau de neurones transférable comme nous le verrons plus loin, la fonction de projection est choisie indépendante du nombre d'utilisateurs situés dans le voisinage de l'utilisateur $u_j$, autrement dit indépendante de la taille du vecteur $\mathbf{o}_j^g(t)$ . En effet celui-ci varie en fonction de l'utilisateur et est amené à changer au cours du temps (notamment dans le cas d'un réseau mobile). Ainsi, pour obtenir une architecture transférable, la fonction de projection pourra être construite à partir d'un mécanisme d'attention tel que défini dans l'article de A. Vaswani et al. intitulé « Attention is all you need », publié dans Proceedings of NIPS 2017, 6.12.2017.

Le mécanisme d'attention a été introduit initialement dans le domaine du traitement du langage naturel, et notamment de la traduction, pour traiter des séquences de mots de longueurs quelconques sans recours à des réseaux complexes de neurones récurrents convolutifs.

Dans le cas présent, chaque équipement, $u_i \in V_j$, calcule sa propre contribution au vecteur d'observation globale $\tilde{\mathbf{o}}_i^g(t) = \left(\left\{(x_i, y_i; R_i(t))\right\}\right)$ et en déduit les vecteurs de clé, requête et valeur comme suit :

$$\mathbf{k}_i = \tilde{\mathbf{o}}_i^g \mathbf{W}_k \qquad (7\text{-}1)$$

$$\mathbf{q}_i = \tilde{\mathbf{o}}_i^g \mathbf{W}_q \qquad (7\text{-}2)$$

$$\mathbf{\upsilon}_i = \tilde{\mathbf{o}}_i^g \mathbf{W}_\upsilon \qquad (7\text{-}3)$$

où $\mathbf{W}_k$, $\mathbf{W}_q$, $\mathbf{W}_\upsilon$ sont des matrices de taille $3 \times n$, et $\mathbf{k}_i$, $\mathbf{q}_i$, $\upsilon_i$ sont respectivement les vecteurs de clé, de requête et de valeur (key, query, value) de taille $n$ associées à l'équipement d'utilisateur $u_i$. Les matrices $\mathbf{W}_k$, $\mathbf{W}_q$, $\mathbf{W}_\upsilon$ sont respectivement dénommées matrices de poids de clé, matrice de poids de requête et matrice de poids de valeur. Ces matrices peuvent faire l'objet d'un apprentissage (leurs éléments pouvant être assimilés à des coefficients synaptiques) au moyen d'une fonction d'objectif définie plus loin.

Par ailleurs, de la même façon, l'équipement d'utilisateur $u_j$ utilise les matrices en question pour calculer ses propres vecteurs de poids de clé, de requête et de valeur $\mathbf{k}_j$, $\mathbf{q}_j$, $\upsilon_j$.

Les poids d'attention des différents équipements d'utilisateurs $u_i \in V_j$ vis-à-vis de l'équipement d'utilisateur $u_j$ sont donnés par les produits scalaires respectifs des vecteurs de clé de $u_i$ avec le vecteur de requête de $u_j$, à savoir $\mathbf{q}_i \mathbf{k}_j^T$. Ces produits scalaires sont divisés par $\sqrt{n}$ pour des questions de stabilisation et soumis à un calcul de *softmax* pour normalisation. On obtient en définitive les $N_j$ scores d'attention des équipements d'utilisateurs $u_i \in V_j$ vis-à-vis de l'équipement utilisateur $u_j$ :

$$\alpha_{i,j} = softmax\left(\frac{\mathbf{q}_i \mathbf{k}_j^T}{\sqrt{n}}\right), \ u_i \in V_j \qquad (8)$$

Le score $\alpha_{i,j}$ exprime le degré d'interaction de l'utilisateur $u_i$ avec l'utilisateur $u_j$. On obtient finalement le vecteur d'observation globale projeté, de dimension $n$, au moyen d'une simple somme garantissant ainsi la transférabilité de l'architecture (la variation du nombre d'utilisateurs dans le voisinage ne changeant pas l'architecture du réseau de neurones) :

$$\mathbf{v}_j(t) = g_w\left(\mathbf{o}_j^g(t)\right) = \sum_{u_i \in V_j} \alpha_{i,j} \mathbf{\upsilon}_i \qquad (9)$$

Selon une première variante d'implémentation, chaque équipement d'utilisateur calcule son triplet de vecteurs de clé, de requête et de valeur puis le transmet à l'unité coordinatrice qui calcule les vecteurs d'observation globale projetés et les renvoie aux différents utilisateurs. L'unité coordinatrice n'a pas directement accès aux informations de positions des différents utilisateurs mais seulement aux vecteurs en question.

Selon une seconde variante, chaque équipement d'utilisateur calcule ses vecteurs de clé, requête et de valeur et les transmet à ses voisins. Un équipement d'utilisateur $\mu_j$ n'a ainsi pas accès aux positions de ses voisins $u_i \in V_j$ mais seulement aux vecteurs $\mathbf{k}_i$, $\mathbf{q}_i$, $\upsilon_i$.

Le vecteur d'observation locale projeté, $\mathbf{u}_j(t) = f_w\left(\mathbf{o}_j^\ell(t)\right)$, et celui d'observation globale projeté, $\mathbf{v}_j(t) = g_w\left(\mathbf{o}_j^g(t)\right)$ sont ensuite combinés en 320 par une fonction de combinaison $h_w : \mathbb{R}^n \times \mathbb{R}^n \to \mathbb{R}^n$ pour fournir un code, $c_j(t)$ de l'état $\mathbf{s}_j(t)$ de l'environnement de l'équipement $\mu_j$ : $\mathbf{c}_j(t) = h_w(\mathbf{u}_j(t), \mathbf{v}_j(t))$. Par exemple, la fonction de combinaison peut être construite selon un mécanisme d'auto-attention (*self-attention mechanism*) qui pondère, selon le contexte, les observables propres à l'utilisateur et ceux relatifs à son environnement :

$$\mathbf{c}_j(t) = \mathbf{\beta}_j^T \begin{bmatrix} \mathbf{u}_j(t) \\ \mathbf{v}_j(t) \end{bmatrix} \qquad (10)$$

où $\beta_j = softmax(\mathbf{u}_j(t), \mathbf{v}_j(t))$ est un vecteur ligne de taille 2. De cette façon, un utilisateur pourra accorder plus ou moins d'attention à son observation locale ou globale selon que celle-ci est plus représentative de son contexte actuel. En l'occurrence, l'information locale de l'utilisateur peut être suffisant à sa prise de décision (par exemple, s'il est le seul dans sa cellule, l'interférence perçue des autres étant alors négligeable).

Dans une seconde phase, 330, l'agent choisit l'action $a_j(t)$ à effectuer, à partir du code $\mathbf{c}_j(t)$, estimé dans la première phase, représentant l'état $\mathbf{s}_j(t)$. La sélection de l'action (c'est-à-dire de la station de base choisie pour l'association) est faite selon une stratégie paramétrée, $\pi_{w,j}(a|\mathbf{s}_j)$, ou de manière équivalente $\pi_{w,j}(a|\mathbf{c}_j)$ fournissant la probabilité de prendre l'action a lorsque l'agent est dans l'état $\mathbf{s}_j$.

L'ensemble des opérations représentées en 312, 314, 320 et 335 sont réalisées par un réseau de neurones d'architecture prédéterminée et dont le jeu de paramètres n'est autre que w . Autrement dit, les opérations de projection $f_w, g_w$ des vecteurs d'observation locale et globale, l'opération de combinaison $h_w$ , ainsi que l'obtention des probabilités d'association $\pi_{w,j}(a|\mathbf{s}_j)$ sont réalisées au moyen dudit réseau de neurones. Il est important de noter qu'en raison de l'expression (9) le calcul du vecteur $\mathbf{v}_j(t)$ est réalisé par simple sommation des contributions des différents utilisateurs du voisinage et que par conséquent la taille de l'entrée du réseau de neurones est bien indépendante du nombre d'utilisateurs dans ce voisinage.

La stratégie d'association est déterminée lors d'une phase d'entrainement préalable à partir d'expériences stockées en mémoire des différents utilisateurs $e_j(t) = (\mathbf{o}_j(t), a_j(t), r(t), \mathbf{o}_j(t+1))$ où $\mathbf{o}_j(t) = \left(\mathbf{o}_j^\ell(t), \mathbf{o}_j^g(t)\right)$ , et en calculant

$$G_j(t) = \sum_{\tau=1}^{T} \gamma^{\tau-1} r_j(t+\tau)$$

des sommes de récompenses actualisées sur des épisodes de longueur $T$, ladite stratégie étant obtenue comme celle maximisant $E_t(|G_j(t)|)$ où $E_t(.)$ est l'espérance mathématique prise sur un ensemble d'expériences relatives à l'instant $t$. La stratégie issue de la phase d'entrainement est une stratégie commune, $\pi_w$ qui est stockée dans le méta-modèle et est téléchargée par les équipements d'utilisateurs lorsqu'ils rejoignent le réseau.

Cette stratégie commune est ensuite adaptée/optimisée par l'agent en fonction de l'évolution de l'environnement (non-stationnaire) de l'équipement d'utilisateur. L'adaptation est réalisée au moyen d'une méthode de gradient de stratégie (*policy gradient method*), de manière connue en soi (cf. ouvrage de R.S. Sutton intitulé « Reinforcement Learning », Chap. 13).

Selon la méthode dite « Reinforce » ou sa variante dite PPO (*Proximal Policy Optimization*), le vecteur $\mathbf{w}_t$ représentant les paramètres w à l'instant $t$ est mis à jour itérativement par :

$$\mathbf{w}_{t+1} = \mathbf{w}_t + \mu\hat{\boldsymbol{\rho}}_t \tag{11}$$

$$\hat{\boldsymbol{\rho}}_t = E_t\left(\frac{\nabla \pi_{w_t}\left(a_j\middle|\mathbf{s}_j\right)}{\pi_{w_{t-1}}\left(a_j\middle|\mathbf{s}_j\right)}\hat{A}_t\left(a_j\middle|\mathbf{s}_j\right)\right)$$

avec où $\mu$ est le taux d'apprentissage, $\hat{\rho}_t = \nabla L(w)$ est l'estimation du gradient de la fonction d'objectif $L(w) = E_t(\log \pi_{wt}(a_j|\mathbf{s}_j)\hat{A}_t(a_j|\mathbf{s}_j))$ et $\hat{A}_t(a_j|\mathbf{s}_j)$ est la fonction d'avantage à l'instant $t$, c'est-à-dire la différence entre la Q-valeur de la paire action-état $(a_j, \mathbf{s}_j)$ et la fonction de valeur pour l'état $\mathbf{s}_j$ :

$$\hat{A}_t\left(a_j\middle|\mathbf{s}_j\right) = Q\left(\mathbf{s}_j, a_j\right) - V\left(\mathbf{s}_j\right) \tag{12}$$

L'homme du métier comprendra qu'à chaque instant ou itération $t$, la mise à jour du vecteur des paramètres est proportionnelle à la fonction d'avantage pour favoriser les actions qui génèrent l'avantage le plus important et inversement proportionnelle à la probabilité de l'action pour encourager l'exploration des actions les moins fréquemment sélectionnées.

Le gradient de la fonction d'objectif peut être estimé par :

$$\hat{\boldsymbol{\rho}}_t = E\left(\nabla\zeta\left(\mathbf{w}_t\right)\hat{A}_t\left(a_j\middle|\mathbf{s}_j\right)\right) \tag{13}$$

$$\zeta(t) = \frac{\pi_{w_t}\left(a_j \middle| \mathbf{s}_j\right)}{\pi_{w_{t-1}}\left(a_j \middle| \mathbf{s}_j\right)}$$

où est le rapport entre la distribution de probabilité à l'instant courant $t$ et la distribution de probabilité à l'instant précédent.

La fonction d'avantage peut être estimée par exemple à partir de l'erreur de différence temporelle $TD_{error}$ (*Temporal Difference Error*) :

$$\hat{A}_t\left(a_j \middle| \mathbf{s}_j\right) \approx r_j(t) + \gamma V\left(\mathbf{s}_j'\right) - V\left(\mathbf{s}_j\right) \tag{14}$$

Alternativement, la fonction d'avantage pourra être estimée à partir d'une estimation d'avantage généralisée ou GAE, telle que décrit par exemple dans l'article de J. Schulman et al. intitulé « High-dimensional continuous control using generalized advantage estimation », ICLR 2016.

La méthode du gradient de stratégie souffre de la variabilité du gradient $|\hat{\rho}_t|$ qui peut conduire à une divergence lors des mises à jour successives. Il est alors préférable de borner en valeur absolue la fonction d'objectif en remplaçant dans l'expression (13) $\zeta(\mathbf{w}_t)\hat{A}_t(a_j|\mathbf{s}_j)$ par une fonction d'objectif, bornée par des facteurs d'écrêtage $1-\varepsilon_1$ pour les mises à jour négatives ($\zeta(\mathbf{w}_t)<1$) et $1-\varepsilon_2$ pour les mises à jour positives ( $\zeta(\mathbf{w}_t)>1$) avec $0<\varepsilon_1<\varepsilon_2<1$, à savoir :

$$\min\left(\zeta\left(\mathbf{w}_t\right)\hat{A}_t\left(a_j \middle| \mathbf{s}_j\right), clip\left(\zeta\left(\mathbf{w}_t\right), 1-\varepsilon_1, 1-\varepsilon_2\right)\hat{A}_t\left(a_j \middle| \mathbf{s}_j\right)\right) \tag{15}$$

avec *clip*($x,a,b$) = min(max($x,a$),$b$). Les facteurs d'écrêtage dissymétriques visent à donner plus d'importance aux mises à jour des paramètres qui améliorent la stratégie qu'à celles qui la dégradent.

Il convient de noter que d'autres méthodes d'optimisation de la stratégie d'association peuvent alternativement être utilisées, notamment les méthodes d'acteur critique à un ou plusieurs pas (A2C, A3C, etc.)

Revenant à la Fig. 3, la seconde phase 330 comprend ainsi une adaptation de la stratégie d'association à l'environnement de l'équipement d'utilisateur, représentée en 335, telle que décrite ci-dessus, suivie en 337 d'une sélection de l'action selon la stratégie ainsi mise à jour. La sélection de l'action sera optimale en termes de compromis amélioration/exploration lorsque les actions choisies dans l'état $\mathbf{s}_j$ le seront stochastiquement avec les probabilités données par $\pi_{w_t}(a_j|\mathbf{s}_j)$ . Alternativement, on pourra opter pour une sélection $\varepsilon$-gloutonne, connue en soi (avec $\varepsilon \in [0,1]$) dans laquelle l'action correspondant à la plus forte probabilité sera choisie dans $1-\varepsilon$ des cas et les autres actions seront choisies aléatoirement dans $\varepsilon$ des cas.

Différentes variantes d'implémentation de la méthode d'association selon l'invention peuvent être envisagées selon que les différents blocs de la Fig. 3 sont pris en charge par les utilisateurs ou l'unité coordinatrice.

Ainsi, dans une solution entièrement centralisée, le méta-modèle (paramétré par le jeu de paramètres $w$) est stocké au sein de l'unité coordinatrice. Les différents équipements d'utilisateurs transmettent à l'unité coordinatrice leurs couples de vecteurs d'observation respectifs $\mathbf{o}_j^{\ell}(t)$ , $\mathbf{o}_j^g(t)$ , ou bien, plus simplement les couples de vecteurs $\left(\mathbf{o}_j^{\ell}(t), \tilde{\mathbf{o}}_j^g(t)\right)$ comme défini plus haut, voire encore les vecteurs d'observation locale, $\mathbf{o}_j^{\ell}(t)$ , accompagnés des vecteurs de poids de clé, de requête et de valeur $\mathbf{k}_j$ , $\mathbf{q}_j$ , $\upsilon_j$. Dans cette solution, les agents associés aux différents équipements résident dans l'unité coordinatrice et les décisions d'association (actions) sont transmises aux utilisateurs concernés. Cette solution présente l'avantage de ne pas solliciter les ressources de calcul des différents utilisateurs au prix cependant d'une quantité importante de messages transmis au sein du réseau.

Dans une solution entièrement distribuée, en revanche, chaque utilisateur possède une instance du méta-modèle et le fait évoluer de manière indépendante à partir de la valeur de la fonction d'utilité (récompense) transmise à chaque itération par l'unité coordinatrice. Chaque utilisateur transmet à ses voisins ses vecteurs $\mathbf{k}_i$, $\mathbf{q}_i$, $\upsilon_i$ obtenus à partir de sa contribution $\tilde{\mathbf{o}}_j^g(t)$ au vecteur d'observation globale, $\mathbf{o}_j^g(t)$ . Cette solution présente l'avantage de préserver la confidentialité dans la mesure où les différents utilisateurs ne transmettent pas leurs positions à leurs voisins. La quantité de messages transmis au sein du réseau est également réduite (valeur de la fonction d'utilité, pour l'essentiel).

Une solution semi-distribuée pourra encore être envisagée, comme représentée en Fig. 3 ; dans laquelle l'unité coordinatrice (*cell side*) sera en charge de collecter les informations nécessaires à la construction des vecteurs d'ob-

$$g_w\left(\mathbf{o}_j^g(t)\right)$$

servation globale et de les encoder ⟨...⟩ , le cas échéant en utilisant un mécanisme d'attention, selon les expressions (8) et (9).

Quelle que soit la solution retenue, on comprendra que les différents agents opèrent en parallèle et de manière asynchrone, comme illustré en Fig. 3.

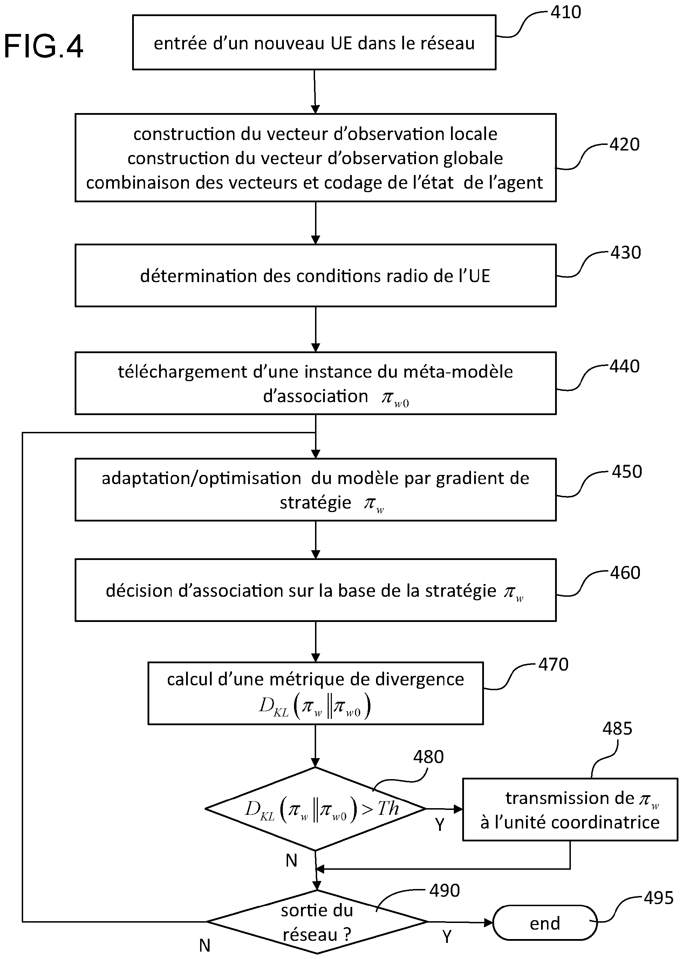

La Fig. 4 représente sous forme d'ordinogramme un exemple de mise en œuvre dans un réseau cellulaire d'une méthode d'association d'équipements d'utilisateurs selon un mode de réalisation.

A l'étape 410, un nouvel équipement d'utilisateur entre dans le réseau et souhaite s'associer à une station de base.

Dans un premier temps, en 420, l'équipement d'utilisateur forme son vecteur d'observation locale et son vecteur d'observation globale, ce dernier étant encodé au moyen d'un mécanisme d'attention. Les deux vecteurs sont combinés pour obtenir un encodage de l'état de l'agent dans l'espace de référence.

De manière optionnelle en 430, l'équipement d'utilisateur détermine les conditions radio dans lequel il se trouve, par exemple les identifiants des stations de base susceptibles de le servir, les niveaux de RSSI des signaux reçus de ces stations de base, le niveau d'interférence, etc.

En 440, l'équipement d'utilisateur télécharge une instance du méta-modèle d'association stocké dans l'unité coordinatrice. L'unité coordinatrice pourra disposer d'un méta-modèle unique ou bien d'une pluralité de méta-modèles. En cas de pluralité de méta-modèles, l'unité coordinatrice peut choisir le méta-modèle pertinent en fonction des conditions radio de l'équipement d'utilisateur, de ses contraintes de qualité de service (QoS), du schéma de codage et modulation utilisé (MCS) utilisé pour la communication.

Le modèle téléchargé peut ensuite évoluer et être actualisé/optimisé en 450 par l'agent associé à l'équipement de l'utilisateur en fonction de son environnement, comme représenté dans la boucle itérative. La décision d'association est ensuite prise en 460 sur la base du modèle ainsi actualisé.

Optionnellement, l'agent associé à l'équipement d'utilisateur peut comparer à intervalles réguliers, voire lorsqu'il quitte le réseau, son modèle actualisé avec l'instance de méta-modèle initialement téléchargée (et stockée localement dans le cas d'une implémentation distribuée). Dans le cas présent, une comparaison à intervalles réguliers a été représentée en 470 dans la boucle itérative. Il convient toutefois de noter que la comparaison peut n'intervenir que toutes les P itérations.

La comparaison entre le modèle actualisé et modèle initialement téléchargé peut se faire par exemple au moyen d'une métrique de divergence de Kullback-Leibler $D_{KL}(\pi_w\|\pi_{w0})$:

$$D_{KL}\left(\pi_w\|\pi_{w0}\right) = \sum_{a_j}\sum_{s_j}\pi_w\left(a_j,s_j\right)\log\frac{\pi_w\left(a_j,s_j\right)}{\pi_{w0}\left(a_j,s_j\right)} \tag{16}$$

où $\pi_{w0}$ représente la stratégie résultant du méta-modèle et $\pi_w$ représente la stratégie résultant du modèle actualisé.

Lorsque la métrique $D_{KL}(\pi_w\|\pi_{w0})$ est supérieure en valeur absolue à un certain seuil en 480, l'équipement d'utilisateur (ou plus généralement son agent) fournit en 485 le nouvel ensemble de paramètres à l'unité coordinatrice qui pourra le prendre en compte pour mettre à jour le méta-modèle par exemple selon un procédé d'apprentissage fédératif impliquant l'ensemble des agents.

La mise en œuvre de la méthode d'association se termine en 495, lorsque l'agent détermine en 490 que l'équipement d'utilisateur quitte le réseau.

**Revendications**

1.  Méthode d'association d'équipements d'utilisateurs à des stations de base d'un réseau, ladite méthode d'association mettant en œuvre une méthode d'apprentissage par renforcement multi-agent, chaque équipement d'utilisateur étant représenté par un agent, **caractérisée en ce que** :

    - lorsqu'un équipement d'utilisateur $\mu_j$ entre dans le réseau, l'agent représentant cet équipement d'utilisateur télécharge une instance d'un méta-modèle ($\pi_{w0}$) pour initialiser un modèle de stratégie d'association ($\pi_{w,j}$), ledit méta-modèle présentant une architecture indépendante de l'utilisateur ;

    - l'agent représentant l'équipement d'utilisateur $\mu_j$ construit (311,313) un vecteur d'observation locale $\left(\mathbf{o}_j^\ell(t)\right)$

) comprenant des observables relatifs à cet équipement et un vecteur d'observation globale $\left(\mathbf{o}_j^g(t)\right)$ comprenant des observables relatifs à un environnement de cet équipement ;

- l'agent associé à l'équipement d'utilisateur $u_j$ projette le vecteur d'observation locale et le vecteur d'observation globale (312,314) dans un même espace de référence et combine (320) les deux vecteurs ainsi projetés pour fournir un code ($\mathbf{c}_j(t)$) de l'état ($\mathbf{s}_j(t)$) de l'agent ;

- l'agent associé à l'équipement d'utilisateur $u_j$ met à jour (335) le modèle de stratégie d'association au moyen d'une méthode de gradient de stratégie ;

- l'agent associé à l'équipement d'utilisateur $u_j$ décide (337) de la station de base avec laquelle s'associer et reçoit en retour une récompense commune calculée à partir d'une fonction d'utilité du réseau.

**2.** Méthode d'association d'équipements d'utilisateurs à des stations de base d'un réseau selon la revendication 1, **caractérisée en ce que** la stratégie d'association $\pi_{w,j}(a|\mathbf{s})$ donne la probabilité de prendre l'action $a$ lorsque l'agent est dans l'état s, l'action $a$ correspondant à une association avec une station de base du réseau.

**3.** Méthode d'association d'équipements d'utilisateurs à des stations de base d'un réseau selon la revendication 1 ou 2, **caractérisée en ce que** le vecteur d'observation locale, $\mathbf{o}_j^\ell(t)$, de l'utilisateur $u_j$, à l'instant $t$ comprend la décision d'association de l'agent à l'instant précédent, $a_j(t-1)$, pour requérir l'association de l'équipement d'utilisateur à une station de base, la réponse de la station de base à cette requête, $ACK_j(t-1)$, le débit requis par le terminal mobile à l'instant $t$, $D_j(t)$, ainsi qu'une estimation de la capacité de la liaison descendante de cette station de base avec $\mu_j$ à l'instant précédent $t-1$, $R_j(t-1)$.

**4.** Méthode d'association d'équipements d'utilisateurs à des stations de base d'un réseau selon la revendication 3, **caractérisée en ce que** le vecteur d'observation globale, $\mathbf{o}_j^g(t)$, comprend les coordonnées des équipements d'utilisateurs situés dans le voisinage $V_j$ de $u_j$, ainsi que les capacités respectives des liaisons descendantes entre ces équipements d'utilisateurs et les stations de base avec lesquelles ils sont associés.

**5.** Méthode d'association d'équipements d'utilisateurs à des stations de base d'un réseau selon la revendication 4, **caractérisée en ce que** le vecteur d'observation globale est projeté dans un espace de référence au moyen d'un mécanisme d'attention calculant pour chaque contribution d'un utilisateur $u_i \in V_j$ au vecteur d'observation globale, un vecteur de clé, $\mathbf{k}_i$, un vecteur de requête, $\mathbf{q}_i$, et un vecteur de valeur, $\upsilon_i$, et que l'on calcule pour chaque utilisateur $u_i \in V_j$, un score d'attention $\alpha_{i,j}$ entre cet utilisateur et l'utilisateur $u_j$, à partir du produit scalaire du vecteur de requête de $u_i$ et du vecteur de clé de $u_j$, le vecteur d'observation globale projeté étant obtenu comme combinaison linéaire des vecteurs de valeur, $\upsilon_i$, respectifs des équipements d'utilisateurs $u_i \in V_j$ pondérés avec leurs scores d'attention correspondants, $\alpha_{i,j}$, la projection des vecteurs d'observation locale et globale, leur combinaison ainsi que l'obtention des probabilités d'association $\pi_{w,j}(a|\mathbf{s})$ avec les différentes stations de base du réseau étant réalisées au moyen d'un réseau de neurones artificiels initialement paramétré à partir de ladite instance du méta-modèle.

**6.** Méthode d'association d'équipements d'utilisateurs à des stations de base d'un réseau selon la revendication 5, **caractérisée en ce que** le vecteur d'observation locale est projeté dans le même espace de référence et les vecteurs d'observation locale et globale sont combinés par un mécanisme d'auto-attention pour fournir le code ($\mathbf{c}_j(t)$) de l'état ($\mathbf{s}_j(t)$) de l'agent.

**7.** Méthode d'association d'équipements d'utilisateurs à des stations de base d'un réseau selon l'une des revendications précédentes, **caractérisée en ce que** la stratégie d'association, $\pi_{w,j}(a|\mathbf{s})$ est paramétrée par un ensemble de paramètres représenté par un vecteur $\mathbf{w}$, le dit vecteur étant mis à jour itérativement par $\mathbf{w}_{t+1} = \mathbf{w}_t + \mu\hat{\rho}_t$ où $\mu$ est

$$\zeta(t) = \frac{\pi_{w_t}\left(a_j\middle|\mathbf{s}_j\right)}{\pi_{w_{t-1}}\left(a_j\middle|\mathbf{s}_j\right)}$$

le taux d'apprentissage, et $\hat{\rho}_t = E(\nabla\zeta(\mathbf{w}_t)\hat{A}_t(a_j|\mathbf{s}_j))$ où est le rapport entre la distribution de probabilité de prendre l'action $a_j$ dans l'état $\mathbf{s}_j$ à l'instant $t$ et la distribution de cette même probabilité à l'instant précédent $t-1$, $\hat{A}_t(a_j|\mathbf{s}_j)$ étant la fonction d'avantage de l'action $a_j$ dans l'état $\mathbf{s}_j$ à l'instant $t$.

8. Méthode d'association d'équipements d'utilisateurs à des stations de base d'un réseau selon l'une des revendications 1 à 6 , **caractérisée en ce que** la stratégie d'association, $\pi_{w,j}(a|s)$ est paramétrée par un ensemble de paramètres représenté par un vecteur **w**, le dit vecteur étant mis à jour itérativement par $\mathbf{w}_{t+1} = \mathbf{w}_t + {}_{\mu}\hat{\rho}_t$ avec où $\mu$ est le taux d'apprentissage, et

$$\hat{\boldsymbol{\rho}}_t = E\left( \nabla \left( \min\left( \zeta(\mathbf{w}_t) \hat{A}_t\left(a_j \big| \mathbf{s}_j\right), clip\left(\zeta(\mathbf{w}_t), 1-\varepsilon_1, 1-\varepsilon_2\right).\hat{A}_t\left(a_j \big| \mathbf{s}_j\right)\right)\right)\right)$$

$$\zeta(t) = \frac{\pi_{w_t}\left(a_j \big| \mathbf{s}_j\right)}{\pi_{w_{t-1}}\left(a_j \big| \mathbf{s}_j\right)}$$

avec $clip(x,a,b) = \min(\max(x,a), b)$ et $0 < \varepsilon_1 < \varepsilon_2 < 1$, et où _____ est le rapport entre la distribution de probabilité de prendre l'action $a_j$ dans l'état $\mathbf{s}_j$ à l'instant $t$ et la distribution de cette même probabilité à l'instant précédent $t$-1, $\hat{A}_t(a_j|\mathbf{s}_j)$ étant la fonction d'avantage de l'action $a_j$ dans l'état $\mathbf{s}_j$ à l'instant $t$.

9. Méthode d'association d'équipements d'utilisateurs à des stations de base d'un réseau selon l'une des revendications précédentes, **caractérisée en ce qu'**une métrique de divergence de Kullback-Leibler, $D_{KL}(\pi_w \| \pi_{w0})$, est calculée entre la distribution de probabilité, $\pi_{w0}$, relative à la stratégie d'association du méta-modèle et celle, $\pi_w$, relative à la stratégie résultant du modèle mis à jour, l'agent représentant l'équipement d'utilisateur transmettant à l'unité coordinatrice les paramètres du modèle mis à jour si cette métrique est supérieure en valeur absolue à un seuil prédéterminé.

10. Méthode d'association d'équipements d'utilisateurs à des stations de base d'un réseau selon l'une des revendications précédentes, **caractérisée en ce que** les agents représentant les équipements d'utilisateurs résident dans l'unité coordinatrice, les équipements transmettant à l'unité coordinatrice leurs vecteurs d'observation locale, $\mathbf{o}_j^{\ell}(t)$ , et d'observation globale, $\mathbf{o}_j^{g}(t)$ , et les décisions d'association des différents agents étant transmises par l'unité coordinatrice à ces derniers.

11. Méthode d'association d'équipements d'utilisateurs à des stations de base d'un réseau selon la revendication 5, **caractérisée en ce que** les agents représentant les équipements d'utilisateurs résident dans l'unité coordinatrice, les équipements transmettant à l'unité coordinatrice leurs vecteurs d'observation locale, $\mathbf{o}_j^{\ell}(t)$ , accompagnés de leurs vecteurs de poids de clé, de requête et de valeur $\mathbf{k}_j$ , $\mathbf{q}_j$, $\upsilon_j$, les décisions d'association des différents agents étant transmises par l'unité coordinatrice à ces derniers.

12. Méthode d'association d'équipements d'utilisateurs à des stations de base d'un réseau cellulaire selon la revendication 5, **caractérisée en ce que** les équipements d'utilisateurs échangent entre voisins leurs vecteurs de poids de clé, de requête et de valeur $\mathbf{k}_j$ , $\mathbf{q}_j$, $\upsilon_j$, les agents représentant les différents équipements d'utilisateurs résidant dans ces équipements et prenant les décisions d'association.

FIG.1

FIG.2

FIG.3

FIG.4

entrée d'un nouveau UE dans le réseau — 410

construction du vecteur d'observation locale
construction du vecteur d'observation globale
combinaison des vecteurs et codage de l'état de l'agent — 420

détermination des conditions radio de l'UE — 430

téléchargement d'une instance du méta-modèle
d'association $\pi_{w0}$ — 440

adaptation/optimisation du modèle par gradient de
stratégie $\pi_w$ — 450

décision d'association sur la base de la stratégie $\pi_w$ — 460

calcul d'une métrique de divergence
$D_{KL}\left(\pi_w \| \pi_{w0}\right)$ — 470

480

$D_{KL}\left(\pi_w \| \pi_{w0}\right) > Th$

Y → transmission de $\pi_w$
à l'unité coordinatrice — 485

N

490

sortie du
réseau ?

Y → end — 495

N

EP 3 979 717 A1

Europäisches Patentamt
European Patent Office
Office européen des brevets

# RAPPORT DE RECHERCHE EUROPEENNE

Numéro de la demande

EP 21 20 0011

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | ZHAO NAN ET AL: "Deep Reinforcement Learning for User Association and Resource Allocation in Heterogeneous Networks", 2018 IEEE GLOBAL COMMUNICATIONS CONFERENCE (GLOBECOM), IEEE, 9 décembre 2018 (2018-12-09), pages 1-6, XP033519773, DOI: 10.1109/GLOCOM.2018.8647611 | 1 | INV. H04W48/20 G06N3/00 G06N7/00 G06N20/00 |
| A | * abrégé * * Section 1. Introduction * ----- | 2-12 | |
| A | QIAOYANG YE ET AL: "User Association for Load Balancing in Heterogeneous Cellular Networks", IEEE TRANSACTIONS ON WIRELESS COMMUNICATIONS, IEEE SERVICE CENTER, PISCATAWAY, NJ, US, vol. 12, no. 6, 1 juin 2013 (2013-06-01), pages 2706-2716, XP011516550, ISSN: 1536-1276, DOI: 10.1109/TWC.2013.040413.120676 * abrégé * * Section 1. Introduction Section 2. System Model * ----- | 1-12 | |
| A | US 2016/323900 A1 (DE DOMENICO ANTONIO [FR] ET AL) 3 novembre 2016 (2016-11-03) * abrégé * * alinéas [0018] - [0031] * * alinéas [0035] - [0059] * ----- | 1-12 | DOMAINES TECHNIQUES RECHERCHES (IPC) H04W H04L G06N |

Le présent rapport a été établi pour toutes les revendications

| Lieu de la recherche | Date d'achèvement de la recherche | Examinateur |
|---|---|---|
| Munich | 17 janvier 2022 | Wolf, William |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

19

**EP 3 979 717 A1**

## ANNEXE AU RAPPORT DE RECHERCHE EUROPEENNE
## RELATIF A LA DEMANDE DE BREVET EUROPEEN NO.

EP 21 20 0011

17−01−2022

| Document brevet cité au rapport de recherche | Date de publication | Membre(s) de la famille de brevet(s) | | Date de publication |
|---|---|---|---|---|
| US 2016323900 A1 | 03−11−2016 | EP | 3089516 A1 | 02−11−2016 |
| | | FR | 3035763 A1 | 04−11−2016 |
| | | US | 2016323900 A1 | 03−11−2016 |

EPO FORM P0460

## RÉFÉRENCES CITÉES DANS LA DESCRIPTION

**Littérature non-brevet citée dans la description**

- **N. ZHAO et al.** Deep reinforcement learning for user association and resource allocation in heterogeneous networks. *Proc. of IEEE Global Communications Conference (GLOBECOM),* 2018, 1-6
- **C. WATKINS et al.** Q-learning. *Machine Learning,* 1992, vol. 8 (3-4), 279-292
- **A. VASWANI et al.** Attention is all you need. *Proceedings of NIPS 2017,* 06 Décembre 2017
- **J. SCHULMAN et al.** High-dimensional continuous control using generalized advantage estimation. *ICLR,* 2016